# EUROPEAN PATENT APPLICATION

(11) **EP 3 859 816 A1**
(43) Date of publication of application: **04.08.2021**
(21) Application number: 19867210.7
(22) Date of filing: 06.03.2019
(51) Int. Cl.: H01M 2/10, H01M 10/613, H01M 10/625, H01M 10/647, H01M 10/653, H01M 10/6554, H01M 10/6556

(54) **BATTERY PACK**

(30) Priority: 26.09.2018 JP 2018180478
(71) Applicant: Vehicle Energy Japan Inc., Hitachinaka-shi Ibaraki 312-8505 (JP)
(72) Inventor: KUBOTA Osamu, Ibaraki 312-8505 (JP); AOKI Sadayuki, Ibaraki 312-8505 (JP); OJIMA Kazunori, Ibaraki 312-8505 (JP); WATAHIKI Yoshitaka, Ibaraki 312-8505 (JP); IRIE Akira, Ibaraki 312-8505 (JP); SUGAWARA Tatsuo, Ibaraki 312-8505 (JP)
(74) Representative: MERH-IP Matias Erny Reichl Hoffmann Patentanwälte PartG mbB
(86) International application number: PCT/JP2019/008765
(87) International publication number: WO 2020/066060

(57) **Abstract**

Provided is a battery pack capable of preventing a damage to the insulation layer on the bottom face of each of battery cells and improving the cooling performance for the battery cells as compared with the conventional configuration. A battery pack includes a plurality of battery cells 10, a plurality of cell holders 20, a plurality of plates 30, an insulation layer 40 on the entire bottom face 10b of each battery cell 10, a heat-transfer sheet 50, and a cooler 60 to cool the battery cells 10 via the heat-transfer sheet 50. The lower end 30b of each plate 30 protrudes downward from the lower face 40b of each insulation layer 40. The cell holder 20 has supports that support the side faces of the battery cell 10 and an opening 22 that exposes the entire lower face 40b of the insulation layer 40 to the heat-transfer sheet 50.

## Description

### Technical Field

The present disclosure relates to battery packs.

### Background Art

Conventionally inventions relating to a power supply including a plurality of battery cells stacked have been known (see the following Patent Literature 1). This conventional power supply includes a battery stack having a plurality of battery cells stacked, insulating separators disposed between the battery cells, and a fixing member for fastening the battery stack in the stacking direction.

The outer case of each battery cell is made of metal, and so this conventional power supply includes the insulating separators between the battery cells to prevent the outer cases of the adjacent battery cells from coming into contact and causing a short-circuit. The outer case of the battery cell may be covered with an insulating film to prevent a short-circuit due to dew condensation, for example (see the same document, paragraph 0028, etc.).

### Citation List

### Patent Literature

Patent Literature 1: JP 2014-010983 A

### Summary of Invention

### Technical Problem

In general, a battery pack including a plurality of battery cells has a problem that the insulating film covering the bottom face of each battery cell is easily damaged during the manufacturing process. In the conventional power supply as described above, each separator has a protrusion covering both ends of the bottom face of the battery cell (see this document, paragraph 0048, Fig. 6, Fig. 7, Fig. 12 and the like).

When a plurality of battery cells stacked with the separators interposed therebetween is placed on a workbench, for example, during the manufacturing process of this conventional power supply, the protrusions of the separators covering the bottom face of each battery cell at the both ends come in contact with the workbench. These protrusions define a space between the bottom face of each battery cell and the workbench. This space avoids a damage of the insulating film covering the bottom face of the battery cell due to foreign matter between the workbench and the bottom face of the battery cell.

In this conventional power supply, the protrusions on the lower end of each separator intervenes between the cooling plate and the battery cell, and so insulates the battery cell from the cooling plate (see this document, paragraph 0048, Fig. 6, Fig. 7, Fig. 12 and the like). This conventional power supply further includes a heat-transfer sheet having thermal conductivity between the bottom face of the battery cells and the cooling plate (see this document, paragraph 0082, Fig. 2, Fig. 3, Fig. 5 and the like), and so enhances the cooling performance of the cooling plate for the battery cells.

In this conventional power supply, however, each separator has protrusions covering both ends of the bottom face of the battery cells, and so has a problem in the cooling performance for the battery cells.

The present disclosure provides a battery pack capable of preventing a damage to the insulation layer on the bottom face of each battery cell and improving the cooling performance for the battery cells as compared with the conventional configuration.

### Solution to Problem

According to one aspect of the present disclosure, a battery pack includes: a plurality of flattened battery cells; a plurality of cell holders located on both sides of each of the plurality of battery cells in a thickness direction of the battery cells to hold and stack the plurality of battery cells in the thickness direction; a plurality of plates that support the plurality of battery cells from both sides in a stacking direction of the plurality of battery cells via the cell holders; an insulation layer on an entire bottom face of each of the battery cells; a heat-transfer sheet in contact with a lower face of each insulation layer; and a cooler configured to cool the plurality of battery cells via the heat-transfer sheet. Each of the plates has a lower end protruding downward from the lower face of each insulation layer, and each cell holder has a support that supports a side face of a corresponding battery cell of the plurality of battery cells, and an opening that exposes an entire lower face of the insulation layer to the heat-transfer sheet.

### Advantageous Effects of Invention

The one aspect of the present disclosure provides a battery pack capable of preventing a damage to the insulation layer on the bottom face of each battery cell and improving the cooling performance for the battery cells as compared with the conventional configuration.

### Brief Description of Drawings

Fig. 1 is an exploded perspective view schematically showing the configuration of a battery pack according to one embodiment of the present disclosure.
Fig. 2 is an exploded perspective view of a battery module making up the battery pack shown in Fig. 1.
Fig. 3 is a perspective view of a battery cell making up the battery module shown in Fig. 2.
Fig. 4 is a perspective view of the members making up the battery module shown in Fig. 2.
Fig. 5 is a schematic enlarged cross-sectional view of the battery pack shown in FIG. 1 along the stacking direction of the battery cells.
Fig. 6 is a schematic exploded perspective view of a battery pack that is a modified example of the battery pack shown in Fig. 1.
Fig. 7 is a schematic enlarged cross-sectional view of the battery pack shown in Fig. 6 along the stacking direction of the battery cells.

### Description of Embodiments

The following describes a battery pack according to one embodiment of the present disclosure, with reference to the drawings.

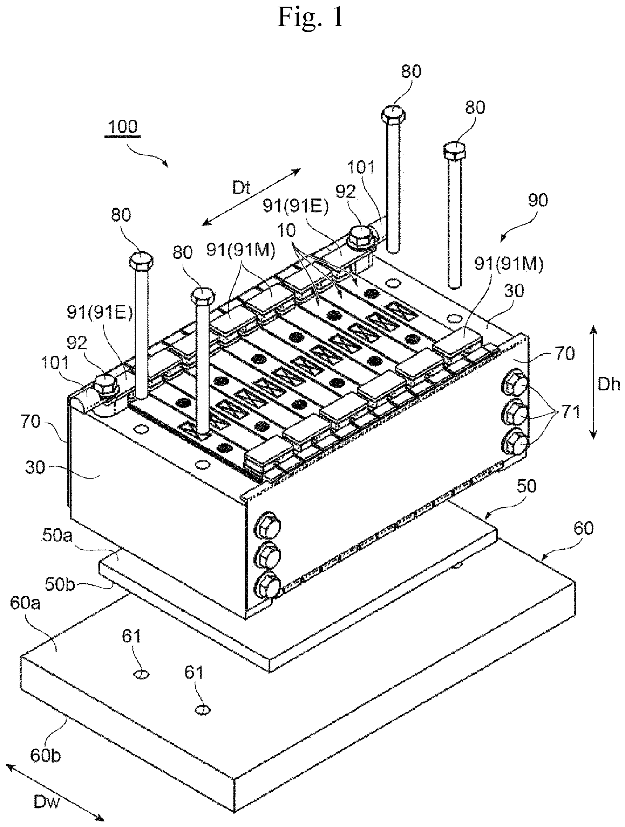

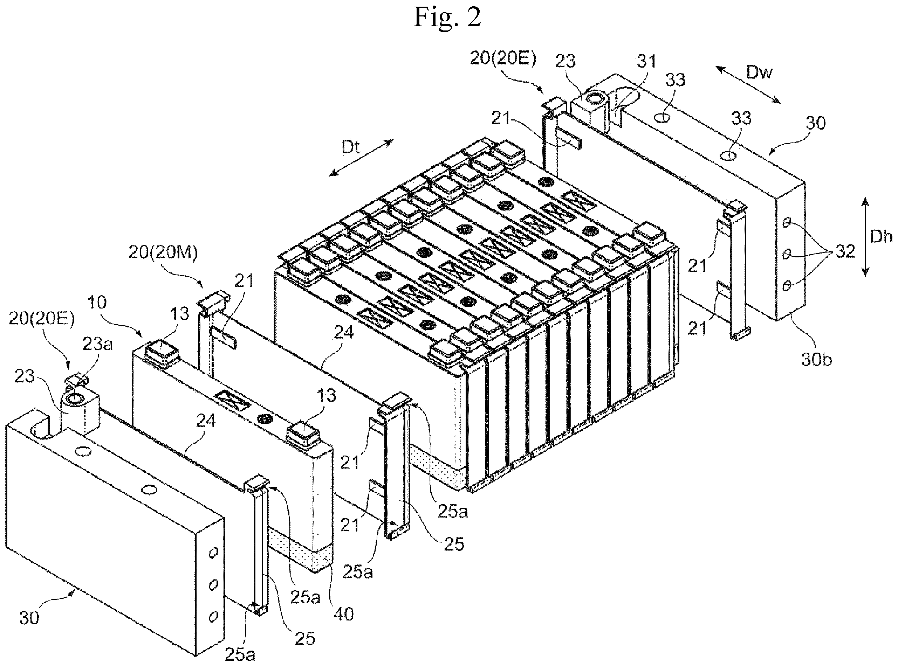

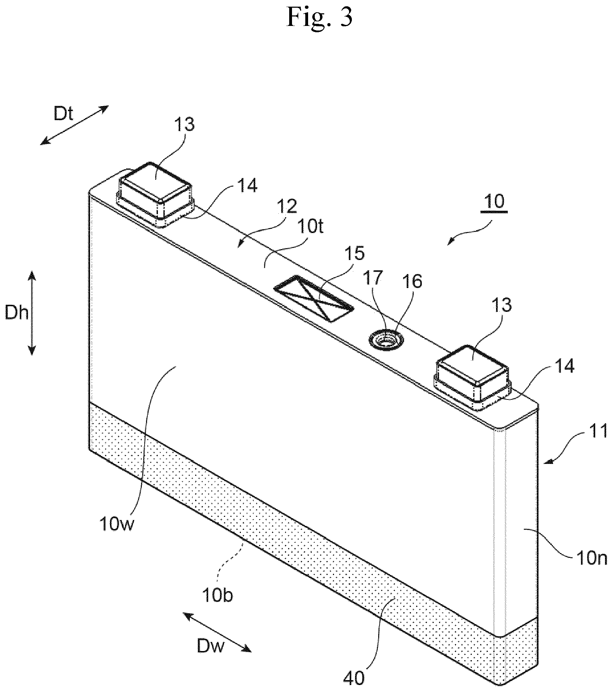

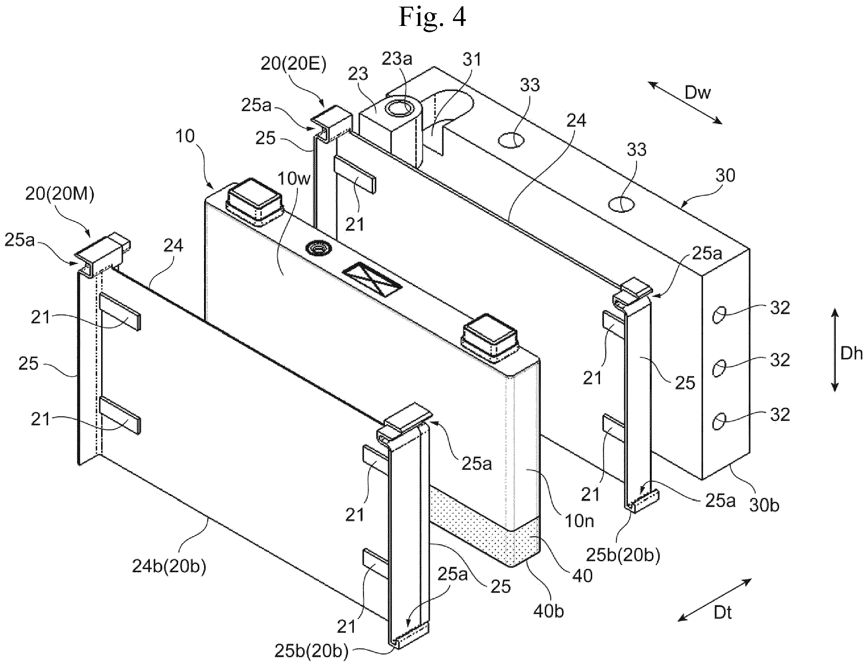

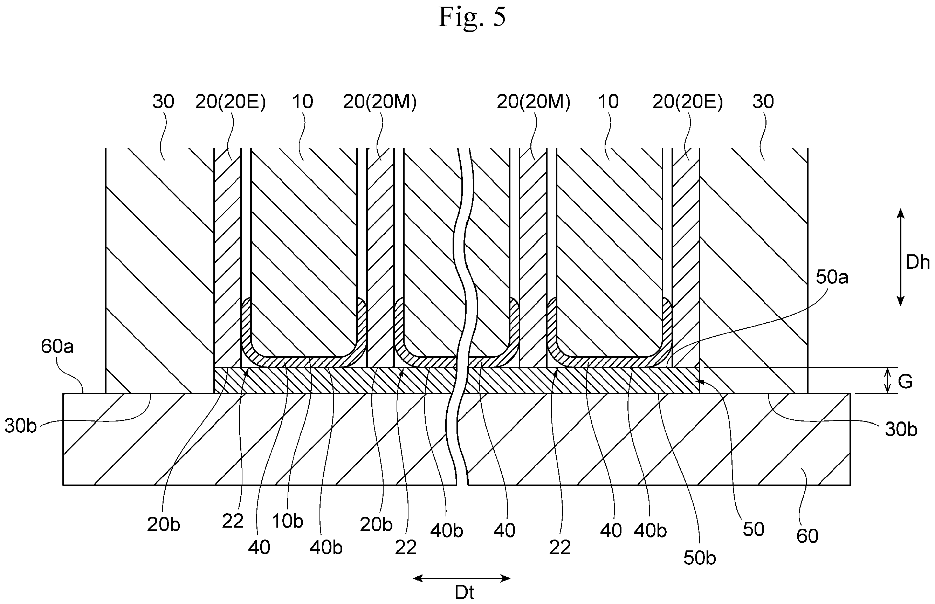

Fig. 1 is an exploded perspective view schematically showing the configuration of a battery pack 100 according to one embodiment of the present disclosure. Fig. 2 is an exploded perspective view of a battery module 90 making up the battery pack 100 shown in Fig. 1. Fig. 3 is a perspective view of a battery cell 10 making up the battery module 90 shown in Fig. 2. Fig. 4 is a perspective view of the members making up the battery module 90 shown in Fig. 2. Fig. 5 is a schematic enlarged cross-sectional view of the battery pack 100 shown in FIG. 1 along the stacking direction of the battery cells 10. The upper, lower, left, and right in the present disclosure are convenient directions for explaining various parts of the battery pack 100, and do not limit the direction when the battery pack 100 is used.

The battery pack 100 of the present embodiment is mounted on a vehicle, such as an electric vehicle (EV) or a hybrid electric vehicle (HEV), and configures a power storage device for the vehicle. Although the details are described later, the battery pack 100 of the present embodiment has the following configuration as major features.

The battery pack 100 of the present embodiment includes a plurality of flattened battery cells 10, a plurality of cell holders 20, a plurality of plates 30, an insulation layer 40, a heat-transfer sheet 50, and a cooler 60. The plurality of cell holders 20 holds the individual battery cells 10 from their both sides in the thickness direction Dt for stacking them in the thickness direction Dt. The plurality of plates 30 supports the plurality of battery cells 10 from both sides in the stacking direction (thickness direction Dt) via the cell holders 20. The insulation layer 40 extends over the entire bottom face 10b of each battery cell 10. The heat-transfer sheet 50 is in contact with the lower face 40b of the insulation layer 40. The cooler 60 cools the plurality of battery cells 10 via the heat-transfer sheet 50. The lower end 30b of each plate 30 protrudes downward from the lower face 40b of each insulation layer 40. The cell holder 20 has supports 21 that support the side faces of the battery cell 10 and an opening 22 that exposes the entire lower face 40b of the insulation layer 40 to the heat-transfer sheet 50.

The following describes various parts of the battery pack 100 of the present embodiment in more details. The battery pack 100 includes the battery cells 10, the cell holders 20, the plates 30, the insulation layer 40, the heat-transfer sheet 50, and the cooler 60 as stated above, and further includes side plates 70 and a plurality of bolts 80. In one example, the battery cells 10, the cell holders 20, the plates 30, the insulation layer 40, and the side plates 70 make up a battery module 90 of the present embodiment. Although not shown, the battery pack 100 may include an electronic circuit board for monitoring and controlling the plurality of battery cells 10, other electrical components, and a housing for accommodating various members.

In one example, the battery cell 10 is a flattened rectangular lithium-ion secondary battery having a substantially cuboid shape. The battery cell 10 has side surfaces, including a pair of wide side faces 10w having a maximum area facing the thickness direction Dt of the battery cell 10, and a pair of narrow side faces 10n having a minimum area facing the width direction Dw of the battery cell 10. The battery cell 10 further has elongated rectangular bottom face 10b and top face 10t facing the height direction Dh of the battery cell 10.

In one example, the battery cell 10 has a cell case 11, a cell lid 12, and a pair of external terminals 13. The cell case 11 is a bottomed square tubular container having an opening at one end in the height direction. In one example, the cell case 11 is made of a metal material, such as aluminum or an aluminum alloy. In one example, the cell case 11 internally stores a storage element that is covered with an insulating sheet. The storage element is prepared by overlaying a strip-shaped positive electrode and a strip-shaped negative electrode while having a strip-shaped separator interposed therebetween and winding them. In one example, the cell case 11 is sealed with the cell lid 12 that is placed along the entire circumference of the opening at the upper end of the cell case 11 and is laser-welded.

The cell lid 12 is a substantially rectangular plate member that closes the opening of the cell case 11. In one example, the cell lid 12 is made of a metal material, such as aluminum or an aluminum alloy. The cell lid 12 has through holes to let the pair of external terminals 13 pass through at both ends in the longitudinal direction, and has a gas release valve 15 and a filling port 16 in the middle portion in the longitudinal direction.

The external terminals 13 each have a rectangular block shape that is a substantially cuboid, and are placed on the outer face of the battery lid 12, specifically, the top face 10t of the battery cell 10 via a gasket 14 having an electrical insulation property. Each external terminal 13 has a round pillar-shaped or cylindrical connection extending from the bottom face facing the cell lid 12 in the direction penetrating the cell lid 12. One of the pair of external terminals 13 is a positive external terminal connected to the positive electrode of the storage element via a positive collector plate in the cell case 11, and the other external terminal 13 is a negative external terminal connected to the negative electrode of the storage element via a negative collector plate in the cell case 11.

In one example, the gas release valve 15 is a portion of the cell lid 12 that is thinned by press-working and has a slit formed. When the internal pressure of the battery cell 10 increases to a predetermined pressure, this gas release valve 15 opens to release gas inside the battery cell 10, and so reduce the internal pressure of the battery cell 10 for safety.

The filling port 16 is for filling the cell case 11 with an electrolyte. In one example, after pouring the electrolyte, a plug 17 may be bonded there by laser welding for sealing of the filling port 16. Examples of the electrolyte to be poured into the cell case 11 include a non-aqueous electrolyte in which a lithium salt such as lithium hexafluorophosphate (LiPF₆) is dissolved in a carbonic ester-based organic solvent such as ethylene carbonate.

In one example, the cell holders 20 are made of an engineering plastic such as polybutylene terephthalate (PBT) or polycarbonate (PC) or a resin material such as rubber. The cell holders 20 hold the individual battery cells 10 while sandwiching them from both sides in the thickness direction Dt. Each cell holder 20 includes supports 21 that support the side faces of the battery cell 10 and an opening 22 that exposes the entire lower face 40b of the insulation layer 40 on the bottom face 10b of the battery cell 10 to the heat-transfer sheet 50.

In one example, each support 21 is a protrusion protruding toward the wide side faces 10w facing the thickness direction Dt of the battery cell 10. In one example, the support 21 is a rectangular protrusion having the longitudinal direction in the width direction Dw of the battery cell 10, the transverse direction in the height direction Dh of the battery cell 10, and the protruding direction in the thickness direction Dt of the battery cell 10. In one example, these supports 21 are disposed at positions to oppose both ends of the wide side face 10w of the battery cell 10 in the width direction Dw. The plurality of supports 21 of the cell holder 20 are placed at intervals in the height direction Dh of the battery cell 10. In this embodiment, four of the supports 21 in total are placed, including two of the them at each end of the cell holder 20 in the width direction Dw.

In one example, the plurality of cell holders 20 include a plurality of intermediate cell holders 20M and a plurality of end cell holders 20E. The intermediate cell holders 20M each intervene between adjacent two battery cells 10 of the plurality of battery cells 10 stacked in the thickness direction Dt. The end cell holders 20E are placed at both ends in the stacking direction (thickness direction Dt) of the plurality of battery cells 10 that are stacked via the intermediate cell holders 20M.

In one example, each end cell holder 20E has a fixing part 23 for fixing an input/output cable 101 of the battery pack 100. In one example, the fixing part 23 protrudes toward the plate 30. In one example, the fixing part 23 is insert-molded with a nut 23a or a bolt for fixing the input/output cable 101.

In one example, each cell holder 20 has a flat part 24 like a flat plate facing the wide side face 10w of the battery cell 10, and lateral parts 25 like a flat plate facing the narrow side faces 10n of the battery cell 10.

The flat part 24 of the intermediate cell holder 20M is placed between two adjacent battery cells 10 to prevent a contact between the two adjacent battery cells 10 and electrically insulate them. The flat part 24 of the end cell holder 20E is placed between the battery cell 10 at the end in the stacking direction and the corresponding plate 30, and prevents a contact between the battery cell 10 and the plate 30 to electrically insulate them. The flat part 24 has the plurality of supports 21 like protrusions at both ends in the width direction Dw of the battery cell 10. In one example, the lower end 24b of the flat part 24 and the lower face 40b of the insulation layer 40 covering the bottom face 10b of the battery cell 10 substantially coincide with each other in the height direction Dh of the battery cells 10.

The lateral parts 25 of each cell holder 20 extend along the thickness direction Dt of the battery cell 10 to a central portion of the narrow side face 10n substantially in parallel to the narrow side face 10n of the battery cell 10. The lateral parts 25 of each end cell holder 20E extend from the flat part 24 to a single side along the thickness direction Dt of the battery cell 10. The lateral parts 25 of each intermediate cell holder 20M extend from the flat part 24 to both sides along the thickness direction Dt of the battery cell 10. The lateral parts 25 of each cell holder 20 each have grooves 25a and 25a at the upper end and the lower end for engagement with the upper end and the lower end of the side plate 70, respectively. In one example, the lower end 25b of the lateral part 25 and the lower face 40b of the insulation layer 40 covering the bottom face 10b of the battery cell 10 substantially coincide with each other in the height direction Dh of the battery cells 10.

The pair of cell holders 20 is placed on both sides of each battery cell 10 in the thickness direction Dt to sandwich the battery cell 10, and have bumps and dents that engage with each other at their lateral parts 25. Engagement of these bumps and dents at the lateral parts 25 of these cell holders 20 as a pair defines an opening 22 at the lower end 20b of the pair of cell holders 20. The opening 22 at the lower ends 20b of the cell holders 20 is defined by the lower ends 24b and 25b of the flat parts 24 and the lateral parts 25 of the pair of cell holders 20 assembled in a cylindrical shape surrounding the corresponding battery cell 10. The opening 22 is a rectangle that exposes the entire lower face 40b of the insulation layer 40 on the bottom face 10b of the battery cell 10.

In one example, the plates 30 are rectangular plate members made of metal, and are end plates as a pair placed at both ends of the plurality of battery cells 10 in the stacking direction. The pair of plates 30 supports the plurality of battery cells 10 from both sides in the stacking direction, i.e., in the thickness direction Dt via the cell holders 20. In one example, each plate 30 has a recess 31 for receiving the fixing part 23 of the end cell holder 20E, screw holes 32 for fastening the side plates 70, and through holes 33 for inserting the bolts 80. Receiving the fixing part 23 of the end cell holder 20E by the recess 31 of the plate 30, the plate 30 supports and reinforces the fixing part 23 during fastening of the input/output cable 101 to the fixing part 23.

The insulation layer 40 extends to cover at least the entire bottom face 10b of each battery cell 10. In one example, the insulation layer 40 is formed with a film or coating having an electrically insulating property. In one example, the insulation layer 40 is made of a resin material having an electrical insulation property, such as polyethylene terephthalate (PET) or rubber. In one example, the insulation layer 40 may extend at least over the entire bottom face 10b of the battery cell 10, may extend over a part or the entire of the side faces of the battery cell 10 including the wide side faces 10w and the narrow side faces 10n, or may extend over the entire outer surface of the battery cell 10 other than the external terminals 13.

As shown in Fig. 5, the lower end 30b of each plate 30 protrudes downward from the lower face 40b of each insulation layer 40. In one example, the lower end 30b of the plate 30 is in contact with the upper face 60a of the cooler 60 and is supported by the upper face 60a of the cooler 60. In one example, the gap G between the lower face 40b of each insulation layer 40 and the cooler 60 in the height direction Dh of the battery cell 10, i.e., the protrusion height that is a distance from the lower face 40b of the insulation layer 40 to the lower end 30b of the plate 30 may be 0.1 [mm] or more and 1.0 [mm] or less.

In one example, the heat-transfer sheet 50 is a heat radiating sheet made of a material having excellent electrical insulation and heat conductivity, such as silicone, acrylic, and ceramic. In one example, the heat-transfer sheet 50 is compressed between the lower end 20b of each cell holder 20 or the lower face 40b of each insulation layer 40 and the upper face 60a of the cooler 60. This means that the entire lower face 40b of the insulation layer 40 on the entire bottom face 10b of each battery cell 10 is in contact with the upper face 50a of the heat-transfer sheet 50. The heat-transfer sheet 50 is pressed against the upper face 60a of the cooler 60 by the lower end 20b of each cell holder 20 and the lower face 40b of each insulation layer 40. This brings the entire lower face 50b of the heat-transfer sheet 50 in contact with the upper face 60a of the cooler 60.

In one example, the cooler 60 is a rectangular flat plate member made of metal, and internally includes a refrigerant channel through which the refrigerant circulates. In one example, the cooler 60 has screw holes 61 for fastening the bolts 80. The cooler 60 may be a part of the housing of the battery pack 100.

In one example, the side plates 70 are rectangular flat plate members made of metal. Each side plate 70 is a rectangular plate having the longitudinal direction in the stacking direction of the plurality of battery cells 10 and the transverse direction in the height direction Dh of the battery cells 10. The pair of side plates 70 is placed on both sides of the plurality of battery cell 10 in the width direction Dw, and is opposed to the narrow side faces 10n of the plurality of battery cells 10 via the lateral parts 25 of the cell holders 20.

The upper end of each side plate 70 is bent toward the center of the battery cells 10 in the width direction Dw, and engages with the grooves 25a at the upper ends of the lateral parts 25 of the plurality of cell holders 20. The lower end of the side plate 70 extends along the height direction Dh of the battery cells 10 and engages with the grooves 25a at the lower ends 25b of the lateral parts 25 of the plurality of cell holders 20.

Each side plate 70 has through holes at the both ends in the longitudinal direction to let bolts 71 pass through. The side plates 70 are fixed to the pair of plates 30 at both ends of the plurality of battery cells 10 in the stacking direction by fastening the bolts 71, which are passing through the through holes at the both ends, with the screw holes 32 of the plates 30. This defines the distance between the pair of plates 30, so that the battery cells 10 are each compressed and held in a predetermined range between the cell holders 20. The method of fixing the side plates 70 to the plates 30 is not limited to the bolts 71, and the side plates 70 may be fixed to the plates 30 by other means such as rivets, swaging, and welding.

The bolts 80 pass through the through hole 33 of the plates 30 and are fastened to the screw holes 61 of the cooler 60. As a result, the heat-transfer sheet 50 is compressed between the lower end 20b of each cell holder 20 or the lower face 40b of each insulation layer 40 and the cooler 60, and is pressed against the lower face 40b of each insulation layer 40 and the upper face 60a of the cooler 60 to be in contact with these faces.

In one example, the battery module 90 includes a plurality of battery cells 10, a plurality of cell holders 20, a pair of plates 30, an insulation layer 40 on the bottom face 10b of each battery cell 10, and a pair of side plates 70. The battery module 90 further includes a plurality of bus bars 91. The bus bars 91 are conductive metal plate members, and include intermediate bus bars 91M connecting the plurality of battery cells 10 in series and end bus bars 91E connecting the series-connected plurality of battery cells 10 to an input/output cable 101.

In the battery module 90, the plurality of battery cells 10 are stacked in the thickness direction Dt while alternately reversing the positions of the positive-electrode external terminals 13 and the negative-electrode external terminals 13. Of these plurality of battery cells 10, the positive-electrode external terminal 13 of one of the adjacent battery cells 10 in the stacking direction (thickness direction Dt) is sequentially connected to the negative-electrode external terminal 13 of the other battery cell 10 via the intermediate bus bar 91M, whereby the plurality of battery cells 10 is connected in series.

Of the plurality of battery cells 10 connected in series, the positive-electrode external terminal 13 of the battery cell 10 at one end in the stacking direction and the negative-electrode external terminal 13 of the battery cell 10 at the other end in the stacking direction are connected to a pair of end bus bars 91E, and each of the end bus bars 91E is connected to the input/output cable 101. In one example, the input/output cable 101 is connected to the end bus bars 91E by passing bolts 92, which pass through the terminal portions at the ends of the input/output cable 101, through the through holes of the end bus bars 91E, and fastening these bolts 92 to the nuts 23a of the fixing parts 23 of the end cell holders 20E.

The following describes advantageous effects of the battery pack 100 according to the present embodiment.

As described above, the battery pack 100 of the present embodiment includes a plurality of flattened battery cells 10, and a plurality of cell holders 20 that holds the individual battery cells 10 from their both sides in the thickness direction Dt for stacking them in the thickness direction Dt. The battery pack 100 further includes a plurality of plates 30 that support the plurality of battery cells 10 from both sides in the stacking direction via the cell holders 20, and an insulation layer 40 on the entire bottom face 10b of each of the battery cells 10. The battery pack 100 further includes a heat-transfer sheet 50 in contact with the lower face of each insulation layer 40, and a cooler 60 to cool the plurality of battery cells 10 via the heat-transfer sheet 50. The lower end 30b of each plate 30 protrudes downward from the lower face 40b of each insulation layer 40. Each cell holder 20 includes supports 21 that support the side faces of the battery cell 10 and an opening 22 that exposes the entire lower face 40b of the insulation layer 40 to the heat-transfer sheet 50.

When the battery module 90 with this configuration is placed on a supporting surface, such as a workbench, during the manufacturing process of the battery pack 100, the lower ends 30b of the plurality of plates 30 supporting the plurality of battery cells 10 from both sides in the stacking direction via the cell holders 20 are supported by the supporting surface. The lower ends 30b of the plates 30 protrude downward from the lower face 40b of each insulation layer 40, and this defines a space between the lower face 40b of each insulation layer 40 and the supporting surface supporting the battery 90. Therefore, foreign matter existing on the supporting surface, if any, is not pressed against the lower face 40b of the insulation layer 40 on the bottom face 10b of each battery cell 10, and so avoids a damage to the insulation layer 40. This prevents a short-circuit via the bottom face 10b of each battery cell 10 more reliably, and so improves the safety of the battery pack 100.

As described above, each cell holder 20 includes the supports 21 that support the side faces of the battery cell 10. The cell holders 20 hold the individual battery cells 10 from their both sides in the thickness direction Dt for stacking them in the thickness direction Dt, and so the supports 21 support the side faces of the battery cell 10 to fix the battery cell 10 to the cell holders 20. This eliminates the supporting of the battery cell 10 at the bottom face 10b by the cell holder 20, and so allows the cell holder 20 to have an opening 22 that exposes the entire lower face 40b of the insulation layer 40 on the entire bottom face 10b of the battery cell 10.

The cell holder 20 has such an opening 22 that exposes the entire lower face 40b of the insulation layer 40 to the heat-transfer sheet 50, so that the cooler 60 cools the entire bottom face 10b of the battery cell 10 via the insulation layer 40 and the heat-transfer sheet 50. This configuration improves the cooling performance for the battery cells 10 compared to the conventional power supply, in which the separators each have protrusions covering both ends of the bottom face of the battery cell.

In the battery pack 100 of the present embodiment, each support 21 of the cell holder 20 is a protrusion protruding toward the wide side face 10w facing the thickness direction Dt of the battery cell 10.

With this configuration, the supports 21 are pressed against the wide side faces 10w of the battery cell 10 from both sides in the thickness direction Dt of the battery cell 10, and so the battery cell 10 can be sandwiched between the supports 21 for supporting and fixing. More specifically, during the manufacturing process of the battery module 90, the cell holders 20 hold the individual battery cells 10 from both sides in the thickness direction Dt for stacking them in the thickness direction Dt, and then a force is applied to the plates 30 placed at both ends of the battery module 90 from both sides in the stacking direction to apply a predetermined compressive force to the battery cells 10 between the cell holders 20.

Then, the side plates 70 are fastened to the pair of plates 30 placed at both ends of the battery cells 10 in the stacking direction to fix the distance between the pair of plates 30. As a result, the supports 21 of the cell holders 20 are pressed against the wide side faces 10w of the battery cell 10 from both sides of the thickness direction Dt, and so the battery cell 10 is sandwiched between the supports 21 and is compressed with a predetermined amount of deformation to be supported and fixed. In this way, the cell holders 20 hold, support and fix the battery cells 10 without supporting the bottom faces 10b of the battery cells 10.

In the battery pack 100 of the present embodiment, the gap G between the lower face 40b of the insulation layer 40 on the bottom face 10b of each battery cell 10 and the cooler 60 is 0.1 [mm] or more and 1.0 [mm] or less, for example.

Such a gap G of 0.1 [mm] or more prevents electrical discharge between the bottom face 10b of each battery cell 10 and the cooler 60, even if holes or cracks occur in the lower face 40b due to deterioration over time. More specifically, the breakdown voltage of air is about 3 [MV/m]. The gap G therefore may be set at 0.1 [mm] or more, and this prevents electrical discharge in the battery pack 100 having a voltage of about 300 [V], for example. A gap G of 1.0 [mm] or less prevents unnecessary separation between the bottom face 10b of each battery cell 10 and the cooler 60, and so suppresses a deterioration in cooling performance for the battery cells 10.

As described above, the present embodiment provides the battery pack 100 that prevents a damage of the insulation layer 40 on the bottom face 10b of each battery cell 10, and improves the cooling performance for the battery cells 10 compared to the conventional ones. The battery pack according to the present disclosure is not limited to the configuration of the battery pack 100 of the present embodiment.

The present embodiment describes the configuration of the battery pack 100 including the supports 21 each being a protrusion. In the battery pack according to the present disclosure, the supports of the cell holders are not limited to protrusions. Specifically, in the battery pack according to the present disclosure, the supports of each cell holder may include an adhesive member that adheres to the side face of the battery cell for supporting. In the battery pack according to the present disclosure, the supports of each cell holder may include a bond that bonds to the side face of the battery cell for supporting.

Examples of the adhesive member include a member having adhesiveness used for adhesive tape, such as an acrylic adhesive, a urethane adhesive, and a silicone adhesive. Examples of the bond include a synthetic bond. When the supports of the cell holders include such adhesive members or bond, these supports may support the narrow side faces 10n facing the width direction Dw of the battery cells 10.

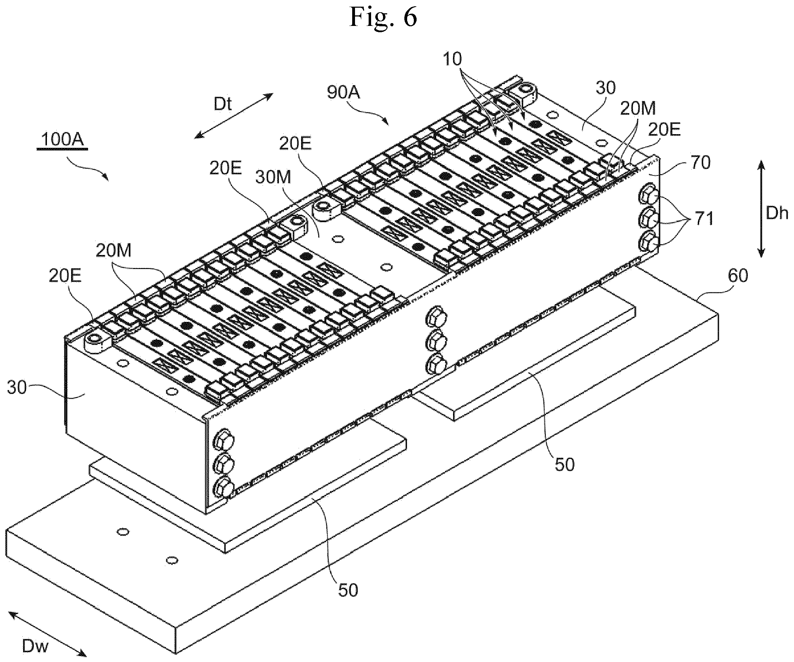

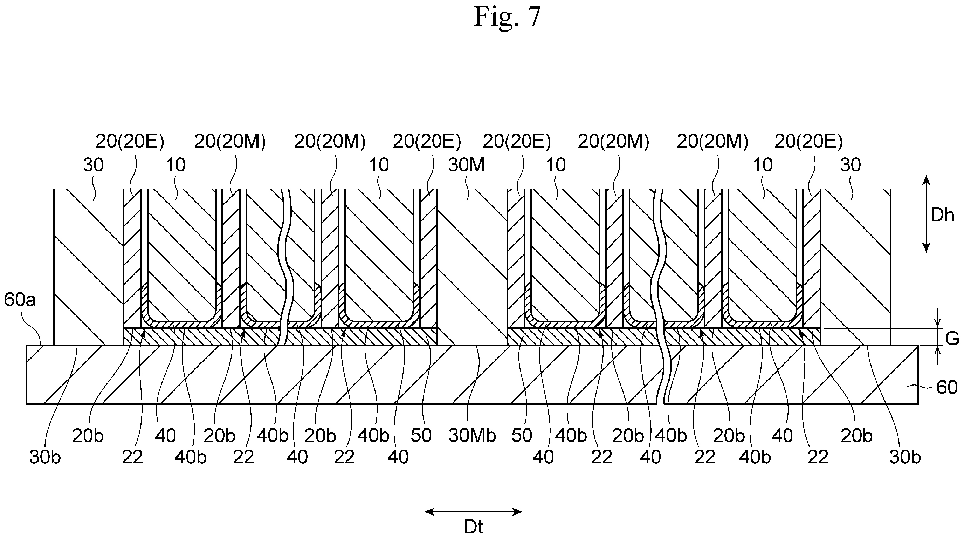

Fig. 6 is a schematic exploded perspective view of a battery pack 100A that is a modified example of the battery pack 100 shown in Fig. 1. Fig. 7 is a schematic enlarged cross-sectional view of the battery pack 100A according to the modified example shown in FIG. 6 along the stacking direction (thickness direction Dt) of the battery cells 10.

The battery pack 100A of this modified example is different from the battery pack 100 shown in FIG. 1 in that the battery module 90A includes an intermediate plate 30M at a center in the stacking direction of the battery cells 10. The battery pack 100A of the this modified example is similar to the battery module 100 shown in Fig. 1 in other respects. Like numerals indicate like parts, and their descriptions are omitted.

The battery pack 100A of this modified example is configured so that the intermediate plate 30M has a lower end 30Mb protruding downward from the lower face 40b of the insulation layer 40 similarly to the lower end 30b of the plate 30. The battery pack 100A according to this modified example, therefore, has the same advantageous effects as those of the battery pack 100 according to the above-described embodiment.

That is a detailed description of the embodiments of the battery pack according to the present disclosure, with reference to the drawings. The specific configuration of the present disclosure is not limited to the above-stated embodiments, and the design may be modified variously without departing from the spirits of the present disclosure. The present disclosure also covers such modified embodiments.

### Reference Signs List

- 10: Battery cell
- 10b: Bottom face
- 10n: Narrow side face (side face)
- 10w: Wide side face (side face)
- 20: Cell holder
- 21: Support
- 22: Opening
- 30: Plate
- 30b: Lower end
- 30M: Intermediate plate (plate)
- 40: Insulation layer
- 40b: Lower face
- 50: Heat-transfer sheet
- 60: Cooler
- 100: Battery pack
- 100A: Battery pack
- Dt: Thickness direction
- G: Gap

## Claims

1. A battery pack comprising: a plurality of flattened battery cells; a plurality of cell holders located on both sides of each of the plurality of battery cells in a thickness direction of the battery cells to hold and stack the plurality of battery cells in the thickness direction; a plurality of plates that support the plurality of battery cells from both sides in a stacking direction of the plurality of battery cells via the cell holders; an insulation layer on an entire bottom face of each of the battery cells; a heat-transfer sheet in contact with a lower face of each insulation layer; and a cooler configured to cool the plurality of battery cells via the heat-transfer sheet, wherein
each of the plates has a lower end protruding downward from the lower face of each insulation layer, and
each cell holder has a support that supports a side face of a corresponding battery cell of the plurality of battery cells, and an opening that exposes an entire lower face of the insulation layer to the heat-transfer sheet.

2. The battery pack according to claim 1, wherein each of the battery cells has a wide side face facing the thickness direction, and the support is a protrusion protruding toward the wide side face.

3. The battery pack according to claim 1, wherein the support includes an adhesive member that adheres to the side face of the battery cell for supporting.

4. The battery pack according to claim 1, wherein the support includes a bond that bonds to the side face of the battery cell for supporting.

5. The battery pack according to claim 1, wherein a gap between the lower face of the insulation layer and the cooler is 0.1 [mm] or more and 1.0 [mm] or less.
